Europäisches Patentamt

European Patent Office

Office européen des brevets

(11) Numéro de publication : **0 390 665 B1**

(12)

# FASCICULE DE BREVET EUROPEEN

(45) Date de publication du fascicule du brevet :
**09.12.92 Bulletin 92/50**

(51) Int. Cl.$^5$ : **B61D 17/22, B62D 47/02**

(21) Numéro de dépôt : **90400819.0**

(22) Date de dépôt : **26.03.90**

(54) **Membrane déformable pour tunnel d'intercirculation entre véhicules successifs ferroviaires ou routiers à ondes de profondeur croissante.**

(30) Priorité : **28.03.89 FR 8904125**

(43) Date de publication de la demande :
**03.10.90 Bulletin 90/40**

(45) Mention de la délivrance du brevet :
**09.12.92 Bulletin 92/50**

(84) Etats contractants désignés :
**AT BE CH DE ES FR GB GR IT LI LU NL SE**

(56) Documents cités :
**EP-A- 0 067 944
EP-A- 0 336 809
GB-A- 471 036
GB-A- 2 122 956
US-A- 2 991 509**

(73) Titulaire : **CAOUTCHOUC MANUFACTURE ET
PLASTIQUES
143 bis, rue Yves Le Coz
F-78000 Versailles (FR)**

(72) Inventeur : **Carimentrand, Jean-Paul
Le Bois Bourgeot
F-58300 Decize (FR)**

EP 0 390 665 B1

## Description

L'invention se rapporte à une membrane déformable, en forme de soufflet, permettant le passage entre véhicules, ferroviaires ou routiers, à l'abri des vents et intempéries. Le terme de soufflet caractérise la première génération de moyens sensiblement étanches, obtenus par des pliages multiples de parois souples, planes, situés entre les portes qui sont disposées en extrêmités des véhicules ferroviaires pour transport de voyageurs. A l'origine en cuir, ces soufflets ont reçu une réalisation en tissu enduit de caoutchouc, décrite par exemple par le brevet FR 695.534 de SEBILLE. La découpe pour conformer les arrondis des angles et la superposition de plusieurs couches fait l'objet dudit brevet.

Une technique de soufflets accordéon est aujourd'hui pratiquée, en particulier sur les autobus articulés et les tramways sur rails, par couture et/ou sertissage de tissus enduits, parfois superposés en complexe améliorant l'isolation, dont l'assemblage se fait alternativement sur la périphérie extérieure et intérieure.

Des améliorations diverses de cette technique sont décrites dans les brevets EP 114.913 et FR 2.348.829 et le certificat d'utilité FR 2.333.657, tous trois de HUBNER.

Le brevet FR 2.328.141 de TAURUS décrit, dans la même technologie, des perfectionnements de forme des lamelles constituant lesdits soufflets pour les rendre plus autoportants. Toutes ces réalisations, pouvant être classées sous l'appellation de soufflets, ont en commun une fabrication à partir d'éléments plans et une position fonctionnelle, obtenue par allongement de l'ensemble par traction sur des brides de fixation aux deux véhicules.

Leur structure, à base de composants de faible épaisseur, limite les possibilités d'isolation thermique et surtout d'isolation acoustique, en raison d'un poids de pièces réduit.

Le brevet FR 2.529.836, de TAURUS également, assure la frontière entre les deux types de membranes d'intercirculation possibles, par ses formes s'apparentant à un accordéon formé de parois minces, mais appartenant cependant aux techniques de réalisation par moulage, préférentiellement en mousse de polyuréthane. L'inconvénient majeur d'une telle conception réside, essentiellement, dans la fragilité de la partie courbe des ondes, amincie et dénuée de renforcement, alors qu'il s'agit des zones les plus vulnérables en raison de leur exposition aux déformations sous intempéries.

Le mode de réalisation d'un tel soufflet s'apparente à celui des membranes de la génération apparue plus spécialement dans l'usage ferroviaire. Lesdites membranes déformables sont confectionnées sur une forme de moulage, donnant une sorte d'anneau fermé autour du passage d'intercirculation entre véhicules. De telles membranes, qui toutes doivent procurer un passage aisé et une isolation thermique ou acoustique, sont citées, sans description de la membrane elle-même, dans les brevets FR 2.496.030 et FR 2.573.714 de FAIVELEY, ainsi que FR 2.568.195 de SIG. Ces trois brevets décrivent chacun un dispositif permettant l'intercirculation aisée des passagers, avec, comme objectif, le plus souvent, la suppression de toute porte palière entre les véhicules accouplés en permanence, grâce à l'insonorisation suffisante apportée par un doublage de la membrane déformable au moyen de cloisons glissantes ou analogues. Les brevets décrivent plus précisément les planchers et les moyens d'assemblage rigides, mais non la membrane elle-même.

Les sociétés FAIVELEY et CAOUTCHOUC MANUFACTURE ET PLASTIQUES ont déposé, en commun, la demande de brevet 88/03979, pour décrire une membrane élastiquement déformable, susceptible de répondre aux besoins nouveaux exprimés par l'industrie ferroviaire.

Ladite membrane est un ensemble, monobloc, reliant deux brides de fixation par une surface ondulée formée d'anneaux parallèles et présentant une section à l'état libre sensiblement sinusoïdale ; elle est partiellement comprimée lors de la mise en place, l'épaisseur de la paroi étant sensiblement constante dans les éléments rectilignes comme dans les parties courbes non développables qui la constituent.

L'expérimentation de membranes réalisées suivant cette définition conduit à d'autres formes susceptibles d'une adaptation aux très grandes dimensions de passage d'intercirculation. En effet, une telle membrane, caractérisée par des renforcements textiles dans ses éléments rectilignes et des couches élastomériques non renforcées, de bonnes qualités mécaniques à coeur et de qualités insonorisantes et ignifuges en revêtements, présente une telle souplesse que ses éléments horizontaux se cambrent exagérément et manquent d'autoportance pour les plus grands modèles de passages d'intercirculation, tels ceux destinés aux véhicules de grandes largeur et hauteur, pour le transport de véhicules accompagnés.

Les recherches de formes améliorées conduisent à une nouvelle définition de membrane déformable confectionnée en forme, qui fait l'objet de la présente invention. L'objectif de la présente invention est donc de satisfaire la liaison continue entre véhicules successifs de grandes dimensions, par exemple largeur de 4 mètres et hauteur de 5 mètres, ceci sans réduction de la section de passage, avec protection des passagers et des véhicules transportés contre les bruits et les intempéries. Cette nouvelle définition se caractérise par une surface ondulée qui présente des anneaux de profondeur croissante depuis la bride d'assemblage jusqu'à la bride de fixation.

La section se reproduisant dans tous ses éléments rectilignes est celle d'une sinusoïde à amplitude variable, l'épaisseur étant identique au fond des ondes intermédiaires et dans les segments presque droits adjacents. Comme dans le dispositif objet du document GB-A-471036, qui, cependant décrit une technique qui ne saurait s'adapter aux besoins actuels des membranes d'intercirculation ferroviaire, une surépaisseur de renforcement est placée sur le sommet extérieur de chaque onde. Par ailleurs, la première onde, la moins profonde, et la dernière onde, la plus profonde, reçoivent une épaisseur plus élevée pour accroître le caractère autoporteur.

Le mode d'assemblage se fait par légère traction pour améliorer encore son caractère autoporteur et le raccordement des éléments rectilignes latéraux, horizontaux et obliques, renforcés ou non de plis de textile, se fait par des onglets polygonaux supprimant les risques de coquage en déformations extrêmes.

La présente invention est donc une membrane autoportante, monobloc, élastiquement déformable, destinée à protéger, de façon étanche, un passage d'intercirculation entre véhicules successifs, ferroviaires ou routiers, de section maximale dans le prolongement des parois desdits véhicules. Ladite membrane autoportante est constituée d'une composition élastomérique renforcée de cablés textiles. Elle est formée d'ondes successives, qui en constituent les segments rectilignes, de section droite ondulée continue sur toute la périphérie du passage à protéger, le sommet de chaque onde affleurant la face extérieure de ladite membrane autoportante présentant une épaisseur sensiblement accrue par rapport à l'épaisseur sensiblement constante des ondes intermédiaires, par adjonction d'un profilé en composition élastomérique,

La membrane autoportante, élastiquement déformable, objet de l'invention est caractérisée en ce que :

- la profondeur des ondes est croissante d'une extrêmité à l'autre, chaque extrêmité étant munie soit d'une bride d'assemblage, soit d'une bride de fixation,
- son épaisseur, sensiblement constante au long des ondes intermédiaires, est accrue le long de la onde de plus faible profondeur et le long de l'onde la plus profonde,

et en ce que les segments rectilignes de ladite membrane autoportante sont reliés, d'une part entre eux par des raccordements en onglet, et d'autre part à des angles hauts et éventuellement à des angles inférieurs par des raccordements en onglets séparés par un court segment droit.

L'invention ainsi que ses variantes seront mieux comprises à la lecture de la description accompagnant les dessins dans lesquels :

- la figure 1 est une vue latérale montrant la silhouette de la membrane fixée aux véhicules ;
- la figure 2 est une coupe entre les véhicules dans l'axe d'une onde de la membrane autoportante ;
- la figure 3 est une section droite de la membrane montrant le mode de fixation aux véhicules ;
- la figure 4 précise les formes de la membrane seule par une section qui est identique dans les segments rectilignes verticaux, horizontaux et obliques ;
- la figure 5 représente les déformées maximales de la section décrite précédemment ;
- la figure 6 est un agrandissement de la coupe entre véhicules de la figure 2, explicitant la réalisation des angles.

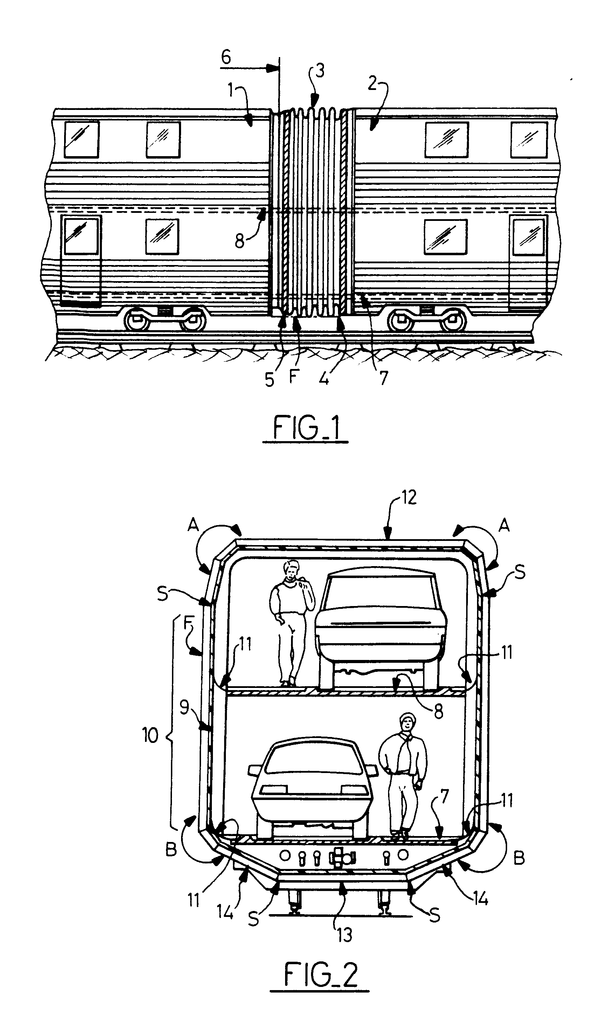

La figure 1 est une vue latérale d'un train de navettes à deux étages servant au transfert de véhicules accompagnés, tels ceux utilisés dans le Tunnel sous la Manche. A plus petite échelle, la même disposition est utilisée en un seul étage dans les rames de métro urbain, tramways et autobus articulés.

Entre deux véhicules (1) et (2) consécutifs, une membrane autoportante (3) assure la continuité de l'étanchéité en suivant toute la périphérie des parois desdits véhicules auxquelles elle est fixée, d'un côté, de façon permanente, par une bride de fixation (4). De l'autre côté, ici représenté sur le véhicule (1), la membrane autoportante (3) est fixée, également par boulonnage, à une bride d'assemblage (5) et celle-ci peut être verrouillée et déverrouillée par une manoeuvre relativement aisée sur un plan d'assemblage (6) solidaire du véhicule (1).

La face extérieure (F) de ladite membrane autoportante est disposée de façon à prolonger le plus exactement possible les parois extérieures, du moins lorsque les véhicules sont alignés. Lorsque les véhicules sont désaccouplés, la bride d'assemblage (5) solidaire du véhicule (2) est libérée du plan d'assemblage (6). Elle est supportée, à déflexion pratiquement nulle, par ledit véhicule (2) grâce à la rigidité communiquée à la structure de la membrane autoportante (3).

Les véhicules et les passagers transportés sur un plancher inférieur (7) et, éventuellement, sur deux étages au moyen d'un plancher supérieur (8), sont ainsi totalement protégés contre les poussières et intempéries, ainsi que contre le bruit et le souffle du croisement de trains, grâce à la raideur propre de la membrane autoportante qui les enferme.

La figure 2 est une coupe entre les véhicules (1) et (2), coupant la membrane autoportante (3) selon un plan transversal situé dans l'onde la plus profonde (9).

Elle montre que sa face extérieure (F) suit au plus près possible le gabarit extérieur des véhicules, le creux des différentes ondes suivant celui-ci à distance constante sur toute sa périphérie, y compris préférentiellement vers le bas, comme illustré, au-dessous des attelages, butoirs et liaisons pneumatiques ou électriques, qui sont ainsi totalement enfermés.

Une bonne étanchéité est réalisable entre cet espace technique et le compartiment accessible aux passagers en faisant joindre, par un soufflet (11), approprié, le plancher inférieur (7) à la paroi de la membrane autoportante. De même que cette jonction intervient juste au bas de la partie rectiligne verticale (10), une jonction tout à fait identique est réalisable au droit du plancher supérieur (8), assurant une séparation quasi-étanche, de sécurité, entre les deux compartiments superposés accessibles aux passagers.

La coupe de la membrane autoportante au fond de l'onde la plus profonde (9), montre que celle-ci, de section constante, est formée uniquement de segments rectilignes, dont le plus grand est formé, latéralement, par les segments rectilignes verticaux (10). Les angles importants de la coupe, tels que les angles hauts (A), entourant le segment horizontal de toiture (12), et les angles inférieurs (B) sont réalisés par deux raccordements en onglet de l'ordre de 35 à 40 degrés de déviation, tandis que des onglets de moindre importance (S) sont ménagés autour du segment horizontal bas (13) pour le raccorder aux deux segments obliques bas (14) contigus à chaque angle inférieur (B).

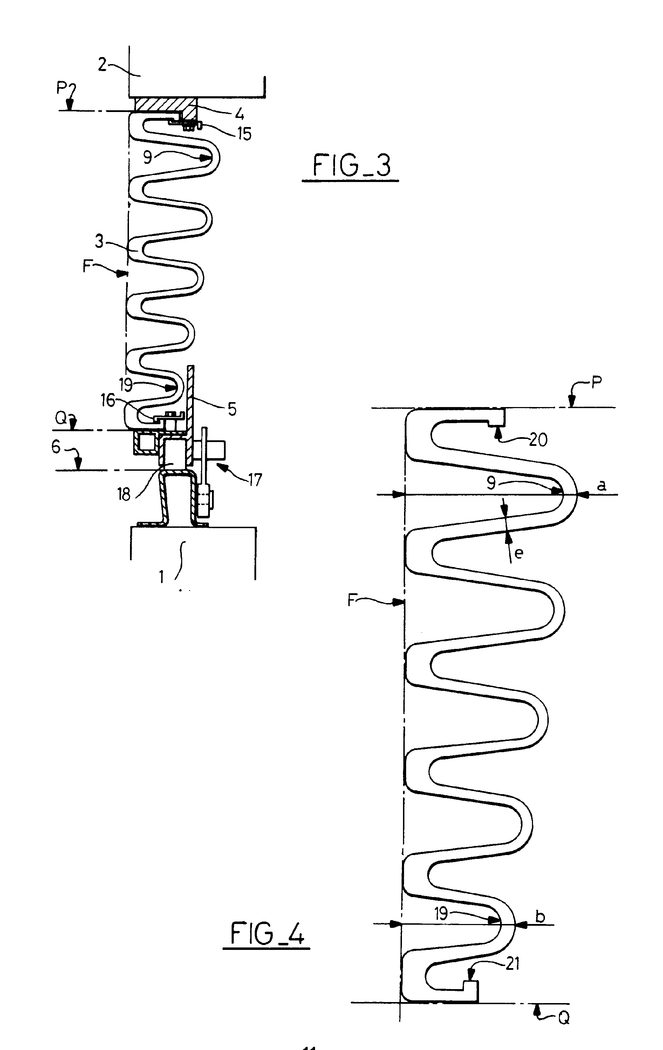

La figure 3 est une section droite de la membrane autoportante (3), valable dans n'importe quel segment rectiligne, montrant le mode de fixation aux véhicules qui impose sa géométrie particulière.

La membrane autoportante (3) est fixée sur le véhicule (2), selon le plan (P), par l'intermédiaire d'une bride de fixation (4) sur laquelle elle est boulonnée par des contreplaques (15). De la même façon, son autre extrêmité est fixée, selon le plan (Q), sur la bride d'assemblage (5) par boulonnage au moyen de contreplaques (16). Du fait du caractère rectiligne de tous les segments de la membrane autoportante (3), les contreplaques (15) et (16) peuvent être constituées de profilés de métal coupés à longueur.

Elles assurent un montage étanche sur la bride de fixation (4) et la bride d'assemblage (5), elles-mêmes réalisées à partir de profilés métalliques en acier inoxydable ou aluminium traité.

La fixation aisée de la bride d'assemblage (5) sur le véhicule (1) est assurée par des moyens de verrouillage (17) et des joints d'étanchéité (18), en dehors du cadre de l'invention, ainsi que des moyens de centrage, non représentés, qui permettent de positionner le joint d'étanchéité (18) sur le plan d'assemblage (6), lors de l'approche de la bride d'assemblage (5). Celle-ci est supportée uniquement par la rigidité propre de la membrane autoportante (3), lorsque les véhicules sont désaccouplés. La structure de ladite membrane autoportante est conçue pour supporter le poids de ladite bride, sans déflexion, dans une position de repos, légèrement en retrait de la position verrouillée, quand les véhicules sont approchés et reliés par leur attelage. La manoeuvre des moyens de verrouillage (17) est destinée à terminer l'approche par une légère traction sur la membrane autoportante (3), traction qui assure l'écrasement du joint d'étanchéité (18) contre le plan d'assemblage (6) sur le véhicule (1), assurant ainsi une bonne étanchéité de l'ensemble aux bruits et aux surpressions désagréables dues aux croisements de véhicules à grande vitesse.

Dans la variante représentée, l'encombrement desdits moyens de verrouillage (17) et de centrage, qui résulte d'un moment d'inertie en flexion notable pour la bride d'assemblage (5) explique la nécessité d'une hauteur réduite pour la onde de plus faible profondeur (19) et les deux ondes voisines. De ce fait, lesdites ondes se maintiennent en retrait de la bride d'assemblage (5), par rapport à l'onde la plus profonde (9), située du côté du véhicule (2), auquel est fixée de façon permanente, par le plan (P), la membrane autoportante.

Dans une variante utilisant un mode d'assemblage différent (non représentée), la croissance de la profondeur des ondes peut se faire de façon inverse, depuis la bride de fixation jusqu'à la bride d'assemblage, en fonction des contraintes d'utilisation.

Cependant, le profil de ladite membrane autoportante est conçu de façon que toutes les ondes s'alignent dans le prolongement du gabarit des véhicules (1) et (2) par leur face extérieure (F). Les différents composants mécaniques d'assemblage, tels que les contreplaques (15) et (16), de centrage et d'étanchéité, se trouvent, ainsi, protégés de toute agression atmosphérique.

La figure 4 présente, en section droite également, la forme au repos de la membrane autoportante, objet de l'invention. L'onde la plus profonde (9), jouxtant le talon de fixation (20) sur le plan (P), présente une hauteur totale (a), tandis que la onde de plus faible profondeur (19), qui jouxte le talon de fixation (21) sur le plan (Q), présente une hauteur totale (b), inférieure à la hauteur totale (a), par exemple 0,65 fois la valeur de ladite hauteur totale (a), dans l'application représentée. La paroi de la membrane autoportante (3) est réalisée à partir de compositions élastomériques, préférentiellement ayant reçu une formulation destinée à améliorer sa résistance au feu, et renforcées de cablés textiles noyés dans ladite composition.

C'est ainsi que l'élastomère de base est, de préférence, choisi parmi ceux qui présentent, dans leur molécule, des atomes d'halogènes tel que chlore ou brome. A titre d'exemples non limitatifs, l'élastomère de base est donc, préférentiellement du polychloroprène, du polyéthylène chloré, du caoutchouc butyl chloré ou bromé.

La formulation de ces élastomères est, bien évidemment, adaptée, par adjonction de charges renforçantes, d'agents anti-oxydants et vulcanisants à la fonction de la paroi de la membrane autoportante (3).

Il est avantageux de choisir, parmi les charges renforçantes celles qui - compatibles avec les contraintes de l'application - améliorent encore la tenue au feu, sans préjudice de la souplesse et de la résistance mécanique de la paroi. Préférentiellement, les charges à base de litharge ou d'oxydes métalliques, alliées au noir de carbone, permettent d'atteindre le niveau de propriétés adapté à l'application.

En ce qui concerne le renforcement textile noyé dans la composition élastomérique, tous les matériaux utilisés, de manière classique, dans l'industrie de transformation du caoutchouc peuvent être employés et, particulièrement, les fibres de rayonne, de polyamide, de polyester ou d'aramide.

La membrane autoportante, est réalisée à partir de compositions élastomériques, renforcées de textiles en nappe cablée par exemple pour les grandes parties constituées de segments rectilignes, ou non renforcées pour les raccordements en onglet des angles hauts (A) ou inférieurs (B). Avantageusement, la partie horizontale de toiture est réalisée en composition élastomérique ne comportant pas de renforcement textile, afin de demeurer plus déformable. Ladite membrane présente une épaisseur sensiblement constante (e) pour le fond des ondes intermédiaires et les raccordements sensiblement plans qui les entourent et sont de largeur variable. Par contre, le sommet extérieur des ondes qui affleure la face extérieure (F) présente une épaisseur égale à environ le double de l'épaisseur (e) par adjonction d'un profilé en composition élastomérique, de module éventuellement plus élevé que le reste du revêtement. La disposition illustrée à titre d'exemple non limitatif assure une petite face plane, de largeur approximativement égale à (e), sur la face extérieure (F), entourée de deux arrondis, eux-mêmes de rayon voisin de la valeur de (e).
Ainsi, le renforcement textile de la membrane autoportante, éloigné de la face extérieure (F), est protégé contre une agression extérieure par griffage ou abrasion de la paroi.

Pour rétablir une homogénéité des déformations extrêmes, l'épaisseur doit être modulée par adjonction de la quantité de matière nécessaire apportée par des plis supplémentaires d'élastomères dans les zones situées d'une part entre le talon de fixation (20) et l'onde la plus profonde (9) et, d'autre part, entre le talon de fixation (21) et la onde de plus faible profondeur (19). Au contraire, dans les ondes intermédiaires entre la onde de plus faible profondeur (19) et l'onde la plus profonde (9), l'épaisseur reste sensiblement constante et égale à (e).

Dans un exemple d'application pratique, la valeur de l'épaisseur sensiblement constante (e) est de 8 millimètres alors que l'épaisseur est de 11 millimètres pour les ondes extrêmes dont, de ce fait, l'épaisseur est modulée.

La profondeur des ondes intermédiaires peut varier de façon linéaire entre ses deux extrêmes, comme représenté. Dans une variante, plusieurs des premières ondes peuvent présenter une profondeur peu différente de la hauteur (b), de façon à s'effacer lors des déformations extrêmes derrière la bride d'assemblage, alos que la profondeur des ondes suivantes peut progresser, de manière continue ou discontinue, plus rapide jusqu'à la hauteur totale (a) de l'onde la plus profonde (9). Selon les contraintes de l'application, le pas des ondes peut être maintenu constant ou varier d'une extrêmité à l'autre de la membrane autoportante.

Dans l'exemple d'application pratique précédemment évoqué, la hauteur totale (a) est de 145 millimètres, la hauteur totale (b) est de 95 millimètres, le pas des ondes étant constant.

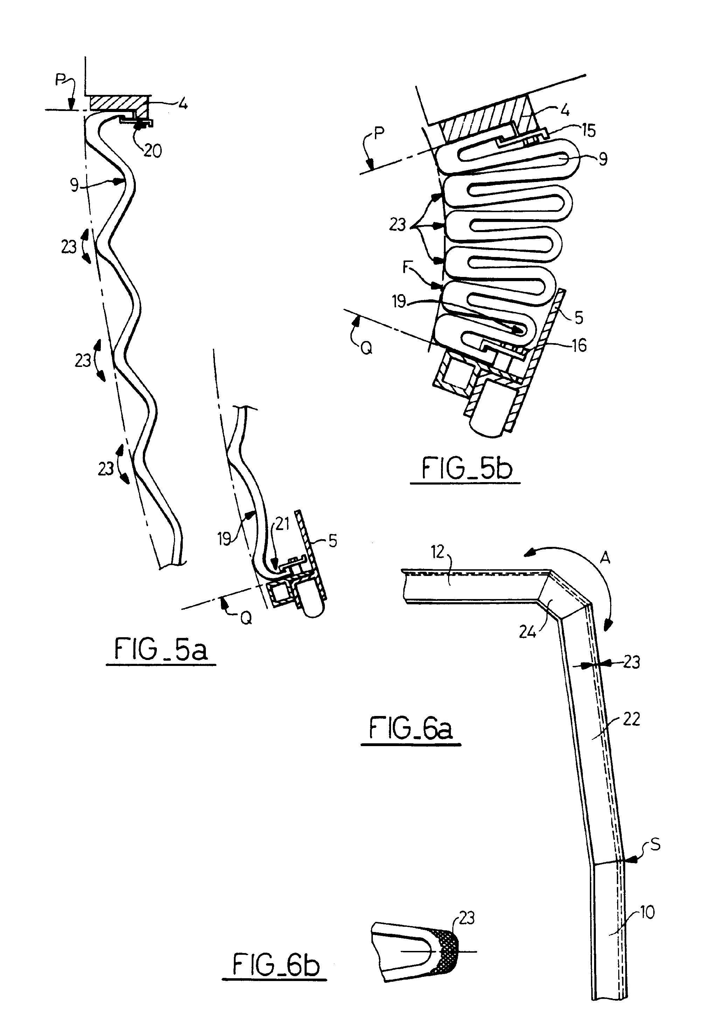

La figure 5 regroupe les déformations maximales permises par la section de membrane déformable (3). La vue 5a est la position la plus étirée prise par la membrane autoportante, à l'extérieur d'une courbure de la trajectoire, qui écarte les faces extrêmes des véhicules, et provoque une légère rotation relative du plan (P) sur la bride de fixation (4) et du plan (Q) sur la bride d'assemblage (5).
Il est visible que la surépaisseur (23), éventuellement de module d'Young supérieur à celui de l'ensemble de la paroi, qui rigidifie le som et extérieur de chaque onde, s'oppose au coquage des parties non développables. En effet, les segments raccordés en onglets multiples, forment des surfaces polygonales dont les arêtes extérieures rigidifient l'ensemble. Au contraire, les fonds d'ondes se trouvent étirés, sensiblement dans le prolongement des parois planes qui les raccordent. Les zones voisines des talons de fixation (20) et (21) se déforment moins en raison de la rigidité due à la surépaisseur modulée jusqu'au fond de la onde de plus faible profondeur (19) ou de l'onde la plus profonde (9).

La vue 5b montre l'écrasement maximal possible de la membrane autoportante du côté des véhicules, à l'intérieur d'une courbure de la trajectoire, qui rapproche les faces extrêmes des véhicules, et provoque la même rotation relative des plans (P) et (Q) de fixation sur les brides de fixation (4) et d'assemblage (5). Les contreplaques (15) et (16) et leurs boulons viennent en contact avec la paroi de l'onde la plus profonde (9) et de la onde de plus faible profondeur (19), les ondes suivantes ou les premières d'entre elles devant être dégagées du contact sur la bride d'assemblage (5). La représentation montre l'intérêt d'une profondeur progressive des ondes intermédiaires dont les rayons extérieurs viennent buter, les uns sur les autres, évitant ainsi d'écraser la courbure interne, tandis que les surépaisseurs (23) des sommets extérieurs viennent, presque en continuité, s'accoler le long de la face extérieure (F).

La figure 6 reprend, en agrandissement, une partie de la coupe de la membrane autoportante par un fond d'onde, entre véhicules.

La vue 6a explicite la réalisation d'un angle haut (A), proche du segment horizontal de toiture (12) et d'un onglet de moindre importance (S) raccordant un segment rectiligne vertical (10) avec un segment oblique haut (22).

Les extrêmités des segments (12), (22) et (10) réalisés par moulage et renforcés de plis textiles, sont décortiquées, c'est à dire débarrassées d'une partie des revêtements et jonctionnées dans des moules avec les couches d'élastomère non encore vulcanisé, qui s'avèrent nécessaires. Ainsi, peuvent être reconstituées les formes non développables, d'une part des onglets de moindre importance (S), et, d'autre part, des angles hauts (A), constitués de deux raccordements en onglet de l'ordre de 35 à 40 degrés séparés par un court segment droit (24).

Moyennant une longueur réglable - représentant la longueur dudit segment droit (24) - des moules de raccordement, les angles inférieurs (B) entre segments rectilignes verticaux (10) et segments obliques bas (14) peuvent être réalisés dans les mêmes moules que les angles hauts (A).
De même, les onglets de moindre importance (S) sont réalisés entre les segments obliques bas (14) et le segment horizontal bas (13). Dans une variante non représentée, de géométrie légèrement différente, les angles inférieurs (B) sont réalisés par un seul raccordement en onglet.

Ces différentes dispositions créent une zone plus déformable, sans renforcement textile, qui permet la déformation des angles, néanmoins rigidifiés contre tout risque de coquage par la continuité des surépaisseurs (23). La vue 6b précise, par une coupe orthogonale à l'un quelconque des segments rectilignes, la construction des sommets d'onde présentant la surépaisseur (23), de module élastique éventuellement supérieur à celui de l'ensemble de la paroi, et qui se prolongent jusqu'à chaque coupe en onglet à l'intérieur des moules de jonctionnement.

Le procédé de réalisation d'une membrane autoportante selon l'invention comporte, préalablement aux raccordements , la fabrication des segments rectilignes verticaux (10) et horizontaux (12) et/ou (13) et des différents segments obliques (14) et (22). Ladite fabrication se fait par moulage sous presse de vulcanisation d'une ébauche constituée d'une superposition de plis de composition élastomérique renforcée ou non de cablés de textile.

Les épaisseurs sont modulées par des plis supplémentaires courant sur toute la longueur de l'onde la plus profonde (9) et de l'onde de plus faible profondeur (19), voisines des talons de fixation (20) et (21), eux-mêmes renforcés par le repliement des cablés de textile. La surépaisseur (23), rigidifiant le sommet extérieur de chaque onde, est réalisée par la pose, après ravivage de la surface, d'un profilé extrudé en élastomère de composition appropriée, dont le module peut être plus élevé que celui du revêtement courant, par adjonction de charges renforçantes ou de fibres courtes.

Dans la variante de composition élastomérique comportant des fibres courtes, une orientation préférentielle, provoquée par l'extrusion permet la création d'une anisotropie favorisant le niveau du module longitudinal dudit profilé.
Un tissu peut également être interposé dans le même but lors de la pose de ce profilé.

Pour assurer le jonctionnement, la partie décortiquée des cablés de textile est recouverte des plis nécessaires de l'élastomère de revêtement non encore vulcanisé et enfermée dans des moules. La succession de ces opérations de raccordement permet de corriger les imprécisions du périmètre total à la fermeture de l'anneau constituant la membrane autoportante monobloc. Celle-ci peut donc être livrée comme un seul ensemble qui est suffisamment souple pour être vrillé en huit pour le transport jusqu'au lieu de montage.

Les avantages apportés par la membrane autoportante selon l'invention sont, outre ce caractère monobloc et fondamentalement autoportant :
- une supériorité dans l'étanchéité, qui est totale, au bruit et aux effets de souffle ;
- une insonorisation efficace et une résistance au différentiel de pression dû aux croisements de trains à grande vitesse, grâce à son épaisseur et à sa masse ;
- une rigidité modulée, de façon à assurer une déformabilité homogène de chaque onde dans les allongements et les raccourcissements maximaux de l'intervalle entre véhicules en service ;
- une faible exigence d'encombrement entre le gabarit extérieur des parois et le passage interne à dégager ;
- une mise en place aisée par pose successive par des contreplaques rectilignes boulonnées, ou éventuellement rivetées de la membrane autoportante sur une bride de fixation et une bride d'assemblage ;
- un caractère d'économie de montage grâce à la possibilité de préparation en atelier du bridage, préalablement à la mise en place sur véhicules.

## Revendications

1. Membrane autoportante (3), monobloc, élastiquement déformable, protégeant de façon étanche un passage d'intercirculation entre véhicules successifs (1) et (2), ferroviaires ou routiers, constituée d'une composition élastomérique renforcée localement de cablés textiles, formée d'ondes successives, qui en constituent les serpents rectilignes, de section droite ondulée continue sur toute la périphérie du passage à protéger, le sommet de chaque onde affleurant la face extérieure (F) de ladite membrane autoportante (3) présentant une épaisseur sensiblement accrue par rapport à l'épaisseur sensiblement constante (e) des ondes intermédiaires, par adjonction d'un profilé en composition élastomérique créant une surépaisseur (23), caractérisée en ce que :

    - la profondeur des ondes successives est croissante d'une extrêmité à l'autre, chacune des extrêmités étant munie soit d'une bride d'assemblage (5), soit d'une bride de fixation (4), sur un plan (P) appartenant au véhicule (2),

    - son épaisseur sensiblement constante (e) au long des ondes intermédiaires est accrue le long de la onde de plus faible profondeur(19) et le long de l'onde la plus profonde (9),

    - et en ce que les segments rectilignes de ladite membrane autoportante (3) sont reliés, d'une part entre eux, par des raccordements en onglets et, d'autre part, à des angles hauts (A) et éventuellement à des angles inférieurs (B) par des raccordements en onglets séparés par un court segment droit (24).

2.    Membrane autoportante (3), élastiquement déformable, selon la revendication 1, caractérisée en ce que la hauteur totale (b) de la onde de plus faible profondeur (19) est de 0,65 fois la hauteur totale (a) de l'onde la plus profonde (9).

3.    Membrane autoportante (3), élastiquement déformable, selon l'une des revendications 1 ou 2, caractérisée en ce que la croissance de la profondeur des ondes successives suit une loi linéaire en fonction de leur rang.

4.    Membrane autoportante élastiquement déformable selon l'une des revendications 1 ou 2, caractérisée en ce que la croissance de la profondeur des ondes successives suit une loi non linéaire, continue ou discontinue, permettant de dégager, pour les premières d'entre elles, le contact de la bride d'assemblage (5).

5.    Membrane autoportante (3), élastiquement déformable, selon l'une des revendications 1 à 4, caractérisée en ce que l'épaisseur sensiblement constante (e) des ondes intermédiaires est de huit millimètres pour une section de membrane dépassant cinq mètres de hauteur et quatre mètres de largeur destinée à l'équipement de navettes de transport de véhicules accompagnés à un ou deux étages.

6.    Membrane autoportante (3), élastiquement déformable, selon l'une des revendications 1 à 5, caractérisée en ce que le revêtement des parois est constitué d'une composition élastomérique à base d'un élastomère présentant, dans sa molécule, des atomes de chlore ou de brome et associé à des charges renforçantes lui conférant une bonne résistance au feu.

7.    Membrane autoportante (3), élastiquement déformable, selon l'une des revendication 1 à 6, caractérisée en ce que la surépaisseur (23), rigidifiant le sommet extérieur de chaque onde, présente une épaisseur peu différente de l'épaisseur sensiblement constante (e) et un module d'Young supérieur à celui de la composition élastomérique du revêtement de la paroi.

8.    Membrane autoportante (3) élastiquement déformable, selon l'une des revendications 1 à 7, caractérisée en ce que la surépaisseur (23) est réalisée en composition élastomérique anisotrope renforcée de fibres courtes présentant une orientation préférentielle dans le sens longitudinal du profilé qui constitue ladite surépaisseur (23).

9.    Membrane autoportante (3), élastiquement déformable, selon l'une des revendications 1 à 8, caractérisée en ce que les raccordements des segments rectilignes horizontaux (12 et 13) et verticaux (10) aux angles hauts (A) et éventuellement aux angles inférieurs (B) présentent des angles de déviation de 35 à 40 degrés.

10.  Membrane autoportante (3), élastiquement déformable, selon l'une des revendications 1 à 9, caractérisée en ce que le talon de l'onde de plus faible profondeur (19) est fixé à la bride d'assemblage (5) alors que le talon de l'onde la plus profonde (9) est associé à la bride de fixation (4).

11.  Membrane autoportante (3), élastiquement déformable, selon l'une des revendications 1 à 10, caractérisée en ce qu'elle enferme les différents composants mécaniques d'assemblage tels que les contreplaques (15) et (16).

**Patentansprüche**

1.    Selbsttragende, einstückige, elastisch verformbare Membran (3), die einen Verbindunsgang zwischen aufeinanderfolgenden Schienen- oder Straßenfahrzeugen dichtend schützt, bestehend aus einer mit Textilseilen örtlich verstärkten elastomeren Mischung, die in aufeinanderfolgende Wellen verformt ist, die davon geradlinige Abschnitte mit wellenförmigem Querschnitt bilden, die sich um den gesamten Umfang des zu schützenden Verbindungsganges erstrecken, wobei der Scheitel jeder Welle, der mit der Außenseite der besagten selbsttragenden Membran (3) fluchtet, eine Dicke hat, die im Vergleich zu der im wesentlichen konstanten Dicke der zwischenliegenden Wellen beträchtlich vergrößert ist durch Hinzufügen eines Profils einer elastomeren Mischung, das eine Überdicke (23) bewirkt, dadurch **gekennzeichnet**,

daß die Tiefe der Wellen von einem Ende zum anderen zunimmt, wobei jedes Ende auf einer zu dem Fahrzeug (2) gehörenden Ebene (P) mit einem Verbindungsflansch (5) oder einem Befestigungsflansch (4) versehen ist,

daß ihre längs der zwischenliegenden Wellen im wesentlichen konstante Dicke längs der Welle (19) mit der geringsten Tiefe und längs der Welle (9) mit der größten Tiefe vergrößert ist, und

daß die geradlinigen Abschnitte der besagten selbsttragenden Membran (3) einerseits miteinander durch Gehrungsverbindungen und andererseits an den oberen Ecken (A) und ggf. an den unteren Ecken (B) durch Gehrungsverbindungen verbunden sind, die durch kurze gerade Abschnitte (24) getrennt sind.

2. Selbsttragende, elastisch verformbare Membran (3) nach Anspruch 1, dadurch **gekennzeichnet**, daß die Gesamthöhe (b) der Welle (19) mit der geringsten Tiefe das 0,65-fache der Gesamthöhe (a) der Welle (9) mit der größten Tiefe beträgt.

3. Selbsttragende, elastisch verformbare Membran (3) nach Anspruch 1 oder 2, dadurch **gekennzeichnet**, daß die Zunahme der Tiefe der aufeinanderfolgenden Wellen nach einer linearen Funktion ihrer Rangfolge erfolgt.

4. Selbsttragende, elastisch verformbare Membran (3) nach Anspruch 1 oder 2, dadurch **gekennzeichnet**, daß die Zunahme der Tiefe der aufeinanderfolgenden Wellen nach einer nicht linearen, stetigen oder unstetigen Funktion erfolgt, die es für die ersten unter ihnen ermöglicht, die Berührung des Verbindungsflansches (5) auszusparen.

5. Selbsttragende, elastisch verformbare Membran (3) nach einem der Ansprüche 1 bis 4, dadurch **gekennzeichnet**, daß die im wesentlichen konstante Dicke der zwischenliegenden Wellen 8 mm beträgt für einen Membranabschnitt mit einer Höhe von mehr als 5 m und einer Breite von mehr als 4 m, der zur Ausrüstung von Pendelzügen für den Transport von Fahrzeugen in einem oder in zwei Stockwerken bestimmt ist.

6. Selbsttragende, elastisch verformbare Membran (3) nach einem der Ansprüche 1 bis 5, dadurch **gekennzeichnet**, daß die Verkleidung der Wände von einer elastomeren Mischung gebildet ist, die in ihrem Molekül Chlor- oder Bromatome aufweist und mit Verstärkungszuschlägen versehen ist, die ihr eine gute Feuerfestigkeit verleihen.

7. Selbsttragende, elastisch verformbare Membran (3) nach einem der Ansprüche 1 bis 6, dadurch **gekennzeichnet**, daß die den äußeren Scheitel jeder Welle versteifende Überdicke (23) eine von der im wesentlichen konstanten Dicke geringfügig abweichende Dicke und einen Elastizitätsmodul aufweist, der größer ist als derjenige der elastomeren Mischung der Verkleidung der Wand.

8. Selbsttragende, elastisch verformbare Membran (3) nach einem der Ansprüche 1 bis 7, dadurch **gekennzeichnet**, daß die Überdicke (23) aus einer anisotropen elastomeren Mischung besteht, die durch kurze Fasern verstärkt ist, die vorzugsweise in Längsrichtung des diese Überdicke (23) bildenden Profils orientiert sind.

9. Selbsttragende, elastisch verformbare Membran (3) nach einem der Ansprüche 1 bis 8, dadurch **gekennzeichnet**, daß die Verbindungen der geradlinigen horizontalen Abschnitte (12 und 13) und der geradlinigen vertikalen Abschnitte (10) mit den oberen Ecken (A) und ggf. mit den unteren Ecken (B) Ablenkwinkel von 35° bis 40° aufweisen.

10. Selbsttragende, elastisch verformbare Membran (3) nach einem der Ansprüche 1 bis 9, dadurch **gekennzeichnet**, daß die Sohle der Welle (19) mit der geringsten Tiefe an dem Verbindungsflansch (5) befestigt wird, bevor die Sohle der Welle (9) mit der größten Tiefe mit dem Befestigungsflansch (4) vereinigt wird.

11. Selbsttragende, elastisch verformbare Membran (3) nach einem der Ansprüche 1 bis 10, dadurch **gekennzeichnet**, daß sie verschiedene mechanische Anschlußbeschläge umfaßt, wie Gegenplatten (15 und 16).

**Claims**

1. A self-supporting membrane (3), consisting of a single piece, elastically deformable, providing a sealed protection for a communicating passage between successive rail or road vehicles (1) arid (2), made of an elastomer composition reinforced locally by textile cords, formed of successive waves, making up the rectilinear segments with a continuous straight wave-form section over the whole periphery of the passage to be protected, the peak of each wave flush with the outer face (F) of said self-supporting membrane (3) having a substantially increased thickness in comparison with the substantially constant thickness (3) of the intermediate waves, by the addition of a profile made of elastomer composition creating an extra thickness (23), characterised in that:

- the depth of the successive waves increases from one end to the other, each end being fitted either with a connecting flange (5), or a clamp (4) on a plane P belonging to vehicle (2),
- its thickness (e), which is substantially constant along the intermediate waves, increases along the least deep wave (19) and along the deepest wave (9),
- the rectilinear segments of said self-supporting membrane (3) are connected to one another by mitred connectors on the one hand and, on the other hand, at the upper corners (A) and where appropriate at the lower corners (B) by mitred connectors separated by a short straight segment (24).

2. A self-supporting, elastically deformable membrane (3), according to claim 1, characterised in that the total height (b) of the least deep wave (19) is 0.65 times the total height (a) of the deepest wave (9).

3. A self-supporting, elastically deformable membrane (3), according to either of claims 1 or 2, characterised in that the increase in depth of the successive waves follows a linear law as a function of rank.

4. A self-supporting, elastically deformable membrane (3), according to either of claims 1 or 2, characterised in that the increase in depth of the successive waves follows a continuous or discontinuous non-linear law, such that contact with the connecting flange (5) can be released for the first ones.

5. A self-supporting, elastically deformable membrane (3), according to any of claims 1 to 4, characterised in that the substantially constant thickness (e) of the intermediate waves is eight millimetres for a section of membrane more than five metres in height and four metres in width designed as equipment for shuttles for transporting accompanied vehicles on one or two decks.

6. A self-supporting, elastically deformable membrane (3), according to any of claims 1 to 5, characterised in that the covering of the walls is made of an elastomer composition based on an elastomer having chlorine or bromine atoms in its molecule and associated with reinforcing fillers giving it good fire resistance.

7. A self-supporting, elastically deformable membrane (3), according to any of claims 1 to 6, characterised in that the extra thickness (23) giving rigidity to the outer peak of each wave is not very different in thickness from the substantially constant thickness (e) and has a Young's modulus greater than that of the elastomer composition of the covering of the wall.

8. A self-supporting, elastically deformable membrane (3), according to any of claims 1 to 7, characterised in that the extra thickness (23) is made of an anisotropic elastomer composition reinforced with short fibres whose orientation lies preferably in the longitudinal direction of the profile constituting said extra thickness (23).

9. A self-supporting, elastically deformable membrane (3), according to any of claims 1 to 8, characterised in that the connectors for the horizontal (12 and 13) and vertical (10) rectilinear segments at the upper corners (A) and if appropriate the lower corners (B) have angles of deviation of between 35 and 40 degrees.

10. A self-supporting, elastically deformable membrane (3), according to any of claims 1 to 9, characterised in that the heel of the least deep wave (19) is fixed to the connecting flange (5) whereas the heel of the deepest wave (9) is connected to the clamp (4).

11. A self-supporting, elastically deformable membrane (3), according to any of claims 1 to 10, characterised in that it contains various mechanical assembly components such as backplates (15) and (16).

FIG.1

FIG.2

FIG_3

FIG_4

FIG_5a

FIG_5b

FIG_6a

FIG_6b